# EUROPEAN PATENT SPECIFICATION

(11) **EP 2 519 435 B1**
(45) Date of publication and mention of the grant of the patent: **12.03.2014**
(21) Application number: 10807561.5
(22) Date of filing: 29.12.2010
(51) Int. Cl.: B62D 7/14, B60G 9/02, B62D 21/02

(54) **HYDRAULIC STEERING SYSTEM FOR USE IN TRANSPORT VEHICLES**
HYDRAULISCHES LENKSYSTEM ZUR VERWENDUNG IN TRANSPORTFAHRZEUGEN
SYSTÈME DE DIRECTION HYDRAULIQUE DESTINÉ À ÊTRE UTILISÉ DANS DES VÉHICULES DE TRANSPORT

(30) Priority: 29.12.2009 NL 2004032
(43) Date of publication of application: 07.11.2012
(73) Proprietor: Daf Trucks N.V., 5600 PT Eindhoven (NL)
(72) Inventor: VAN DER KNAAP, Albertus Clemens Maria, NL-5706 KX Helmond (NL); RAUE, Victor, NL-5664 BH Geldrop (NL); NEELE, Stafanus Nicolaas Everardus, NL-5641 PP Eindhoven (NL); VAN NISTELROOIJ, Adrianus Maria Antonius, NL-5283 MD Boxtel (NL); HEIJNENS, Hendrikus Antonius Hubertus, NL-5612 NG Eindhoven (NL); LEIJSSEN, Henricus Johannes, NL-6034 RJ Nederweert-Eind (NL); HENDRIKS, Felix, NL-5641 TG Eindhoven (NL)
(74) Representative: Jansen, Cornelis Marinus
(86) International application number: PCT/NL2010/050895
(87) International publication number: WO 2011/081522

(56) References cited:
- EP-A1- 0 895 923

## Description

### FIELD

The invention refers to a hydraulic steering system for use in transport vehicles.

### BACKGROUND

Especially when a vehicle is equipped with three or more axles, the wheels of the third (fourth, fifth, etc...) axle need to be steered in correspondence with the driver initiated steering angle of the front axle in order to avoid excessive tire wear during maneuvering.

In principle this problem can be solved by a mechanical interconnection via a linkage system. However, this leads to a rather inflexible solution with major packaging restraints and weight penalties. Alternatively the problem can be solved with an active computer controlled system (electro-mechanic or electro-hydraulic). Unfortunately these systems are rather complex and consequently expensive. Probably this is caused by the fact that the fail-safe requirement yields a redundant system, doubling the costs and number of components.

EP 0 895 923 discloses a hydraulic steering system wherein a pressure regulating valve is provided, which functions as a fail safe damping circuit, so that additional fail safe systems can be dispensed with. The pressure regulating valve is activated by two separate solenoids. In middle position a pump port is blocked while the two actuator ports and a tank port are interconnected. Moreover the actuator ports have a choked opening, resulting in increased damping to tune the fail-safe characteristics.

While the disclosed prior art recognizes that passive damping is able to provide fail safe behavior of a steered axle, the valve involved in providing the fail-safe behaviour is relatively complex and requires additional valves in the pressure circuit. A desire exists to further reduce the complexity of current steering systems and to reduce the power consumption of known active steering systems.

### SUMMARY

The invention desires to further enhance the steering action of electro hydraulically actuated steering systems. To this end, a hydraulic steering system is provided for use in transport vehicles, comprising: a co-steered axle comprised of wheels and steering arrangements for steering the wheels; a hydraulic pressure circuit comprised of a hydraulic fluid pump; first and second pressure control modules; first and second pressure supply terminals arranged at respective locations in the circuit; and a hydraulic fluid reservoir; a pressure fluid controlled steering actuator mechanically coupled to the steering arrangements; and comprising first and second actuator compartments hydraulically interconnected via respective first and second pressure supply terminals; said wheels comprising a self centering mechanism active in the absence of pressure supply in the hydraulic pressure circuit; and a steering controller arranged to control said pressure control modules in correspondence with steering signals received from a main steering unit.

According to an aspect said first and second pressure supply terminals are interconnected via at least the first pressure control module; the first pressure control module coupled in series with the second pressure control module; and a fail safe mechanism is provided arranged to release, in a fail condition, first and second pressure control modules.

Accordingly, a pressure circuit for the hydraulic steering system is provided wherein fail safe behaviour is intrinsic and power or pressure failures results in neutral centering effect of the wheels.

### EXEMPLARY EMBODIMENTS

Figure 1 shows an exemplary pressure circuit for a steering arrangement according to an aspect of the invention;
Figure 2 shows another exemplary pressure circuit for a steering/lifting arrangement according to an aspect of the invention;
Figure 3 shows yet another exemplary pressure circuit for a steering/lifting arrangement according to an aspect of the invention;
Figure 4 shows a side elevation of a truck having an axle assembly according to the invention mounted at a rear end thereof;
Figure 5A shows a first variation of an axle lift mechanism according to the invention;
Figure 5B is a side elevation of Figure 5A showing structural elements hidden from view in Figure 5A;
Figure 6 shows a second variation of an axle lift mechanism according to the invention;
Figure 7 is the lift axle arrangement of Figure 6, viewed from above;
Figure 8 is a top plan view of the lift axle arrangement of Figure 6 and 7;
Figure 9 shows an axle assembly according to the invention incorporating the lift axle assembly of Figures 6-8;
Figure 10 shows an integrated central carrier for use in the assembly of Figure 9;
Figure 11 is an alternative form of an integrated central carrier installed between the chassis rails of a truck and serving as a support for an articulated trailer coupling (popularly referred to as a "fifth wheel");
Figure 12 is an axle assembly similar to Figure 9 shown from below and incorporating the integrated central carrier of Figure 10; and
Figure 13 shows a variety of steering arrangements.

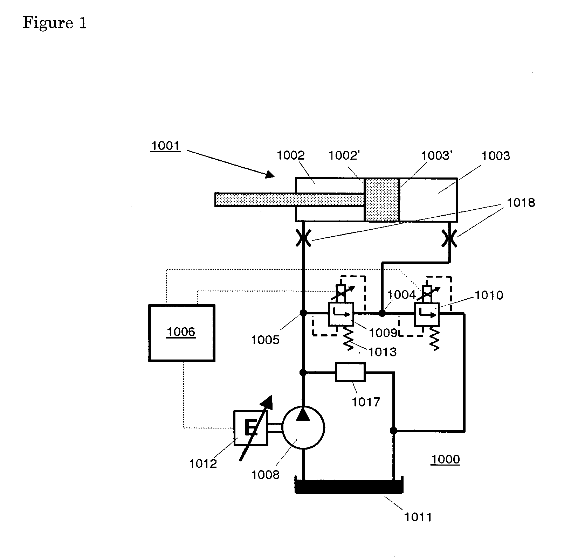

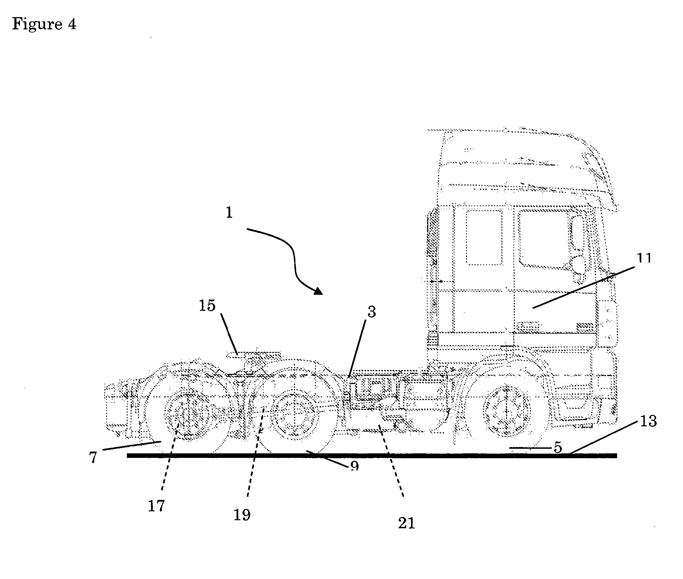

Figure 1 shows an exemplary pressure circuit 1000 for a steering arrangement according to an aspect of the invention. Typical system components of the axle assembly according to an aspect of the invention further comprise a co-steered axle comprised of wheels and steering arrangements for steering the wheels. This is indicated in Figure 4. Furthermore, a pressure fluid controlled steering actuator 1001 is mechanically coupled to the steering arrangements and comprises first and second actuator compartments 1002, 1003 hydraulically connected via respective first and second pressure supply terminals 1004, 1005. In addition, the wheels comprise a self centering mechanism (not shown) active in the absence of pressure supply in the hydraulic pressure circuit; and a steering controller 1006. In addition, the circuit comprises a hydraulic fluid pump 1008; first and second pressure control modules 1009; 1010; first and second pressure supply terminals 1004, 1005 arranged at respective locations in the circuit 1000; and a hydraulic fluid reservoir 1011. The steering controller 1006 is arranged to control said pressure control modules 1009, 1010 in correspondence with steering signals received from a main steering unit (not shown). Advantageously, the hydraulic fluid pump 1008 is an electrically controlled hydraulic fluid pump. To generate a correct pressure, a speed or flow control system may be provided (schematically illustrated as part of steering controller 1006) to control the pump flow. An electric motor driven pump 1008 enables, by speed of rotation feed back control, flow control in dependency of the actual vehicle state and required actuation performance. The pump 1008 additionally enables complete shutting off of the system 1000; in particular, releasing the electric power from the pump when not used or switching into a low energy mode by lowering the pump flow when not full power needs to be made available, e.g. during straight-line driving on the highway, thus avoiding unnecessary energy consumption.

The disclosed at least two proportional pressure control valves 1009, 1010 act as pressure control modules. First and second pressure supply terminals 1004, 1005 are connected via at least the first pressure control module1009; the first pressure control module 1009 coupled in series with the second pressure control module 1010 to control the pressure in the working compartments 1002, 1003 of the steering actuator 1001. The proportional valves 1009, 1010 are normally open. Furthermore oil reservoir 1011 is provided to buffer a certain amount of oil going in and out of the hydraulic assembly 1000; and a computer control system 1006 with sensors to accurately control the steering angles of the wheel. In its simplest form this can be a sensor (not shown) to measure the position of the front wheels, acting as input for a control algorithm; and a sensor to measure the angles of the wheels, e.g. linear measurement of actuator position, to be steered would suffice. Advantageously, the pump 1008 is provided as an electro-hydraulic power pack, having an Electronic Control Unit (ECU) power electronics (amplifiers) 1012 and hydraulic tank 1011 integrated into a single integrated assembly.

In order to steer the wheels, the electric pump 1008 is activated ensuring a flow through the indicated proportional pressure control valves 1009, 1010. To contract the steering actuator1001, pressure is built up in the rod sided compartment 1002 of the steering cylinder. For this purpose the first valve 1009 is (partially) closed while the second valve 1010 remains opened. As a result the pump flow is choked such that pressurised fluid, typically proportional to the valve actuation of valve 1009; in particular, proportional to an electric current that is supplied to the valve solenoid, is pumped into the rod sided compartment 1002. The flow from the contracting, piston sided compartment 1003 is fed back without substantial resistance via the second valve 1010 into the oil reservoir 1011. In order to expand the cylinder 1001, corresponding to a steering action in the reverse direction, the first valve 1009 is opened while the second valve 1010 is partially closed. As a result pressurised fluid is being forced with a substantial same pressure into both working compartments 1002, 1003. While the inventive principle can be applied with separate actuators each arranged to provide a steering actuation for a single steering direction, in the disclosed embodiment the pressure control modules are designed to provide a proportional pressure drop between first and second pressure control modules 1009, 1010 that is in correspondence to respective asymmetrically designed effective force transmission areas 1002', 1003' in the actuator compartments 1002, 1003 to result in a substantially symmetrically loaded steering force to either steering direction of the wheels. This can be understood as follows; the effective force transmission area of the piston 1003' is larger than the effective force transmission area of rod side 1002', wherein the area difference corresponds to the rod cross sectional area 1002' accordingly leading to the said asymmetric design. Thus, by applying an identical pressure in both compartments 1002, 1003 the steering cylinder 1001 expands. In that case, flow from the contracting, rod sided compartment 1002 is fed via first valve 1009 into the expanding piston sided compartment 1003. When the dimensions of the piston are designed in an asymmetric way, such that the piston area 1003' equals twice the rod area 1002', the actuation to left and right can be considered symmetric from a hydraulic perspective and thus results in a substantial symmetric loading, with all the advantages that this entails for the governing control system 1006.

Thus, in an embodiment, an asymmetric hydraulic cylinder 1001 is provided to steer the wheels enabling symmetrical loading in terms of pressures and flows for comparable steering actions to the left and to the right direction. This may provide more accurate pressure control, especially around middle position of the steering actuator 1001 and improved system performance.

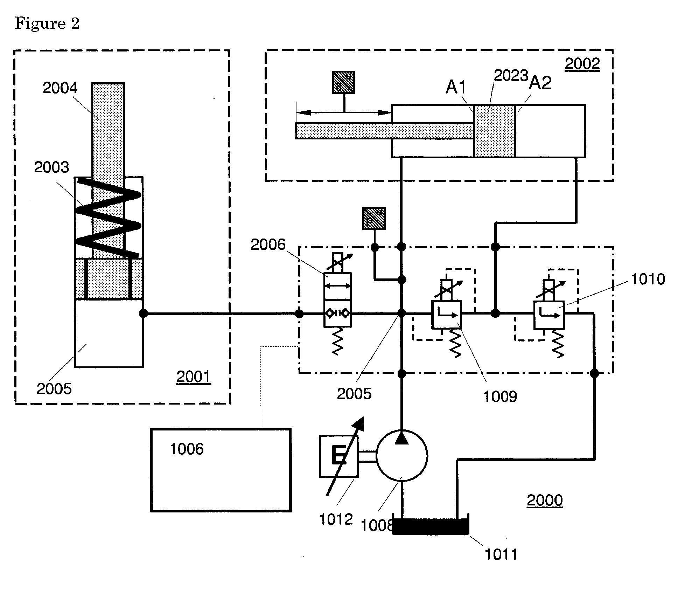

Regarding the steering system's fail-safe behaviour, its layout has intrinsic fail safe properties: Since the first and second pressure supply terminals 1004, 1005 are connected via the proportional pressure control module 1009 and the first pressure control module 1009 is coupled in series with the second pressure control module 1010; a fail safe mechanism 1006 can be provided arranged to release, in a fail condition, the first and second pressure control modules 1009, 1010 to thereby provide a pressure less hydraulic connection between the actuator compartments 1002, 1003. It is noted that the term pressure less or pressure-free refers to the static situation where through the release of the valves 1009, 1010, substantially no pressure can be built up in the terminals 1004, 1005; while at the same time a substantially free hydraulic connection is provided between the compartments 1002 and 1003. In the dynamic situation, in particular, when reaching a self centered condition, a small pressure difference may occur in case the connection between the compartments is not completely free of damping. Indeed a small damping is actually allowed and may add to the fail safe-behaviour. Thus, a pressure less and free connection is provided when the pressure in terminals 1004 and 1005 is substantially absent by opening the valves 1009, 1010. In an embodiment, the self centering mechanism is provided by having the wheel contact point trailing behind the wheel suspension and/or by a self centering springs mechanically centering the wheels. This advantageously allows for stable fail safe behaviour on the basis of wheel caster, ensuring that the tire contact point trails behind the steering axis. For other applications an additional, cylinder integrated, self centering spring (see the embodiment of Figure 2) can be provided to improve the vehicle stability in case of power failures. It is noted that the design may be such that self centering takes place without action of a specific element such as a self centering spring. Indeed self centering can be commonly provided by a balanced design, in particular, by tuning the contact point of the steering wheels or relying on the effect that the tires may be dimensioned to have a self centering effect. On the other hand the self centering mechanism may be of an express identifiable structural nature, such as a self centering spring. It is considered that in every such case a self centering mechanism is active which complies with the requirements of the present invention.

An important aspect of this fail safe behaviour requirement is, that the working compartments 1002, 1003 of the steering actuator 1001 are hydraulically interconnected, thus allowing free exchange of oil between the compartments 1002, 1003 and that any build up of pump pressure can be avoided thus obviating a worst case scenario where, in case of failure, pressure is inadvertently built up in one or both compartments 1002, 1003 and avoiding uncontrollable reaction of the vehicle course. When providing an asymmetric cylinder assembly 1001 as disclosed and having the afore mentioned actuation properties, this critical failure aspect is especially relevant since allowing easy and cost effective implementation.

An additional important aspect is the application of open centre proportional pressure control valves. Specifically, in such embodiment, the pressure control modules each comprise a proportional pressure control valve 1009, 1010 selectively controlled between normally open pass through condition, inducing a limited pressure drop; and a choke condition, inducing increased pressure drop; and the fail safe mechanism arranged for resetting the valve to the normally open condition. This design has a built-in safety advantage that when the electric power fails the valve integrated spring 1013 in combination with a pilot pressure mechanism ensures a resetting to fully opened valve 1009. In the event that one of the valves would be mechanically blocked (caused by polluted oil with chips, swarfs, steel particles, etc...) the fail safe mechanism may further be provided with a fluid pump shut-off system and/or a shortcut valve 1017 to release the pressure in the hydraulic pressure circuit. Thus, by using a controllable power pack 1008, 1012 a secondary fail-safe measure is enabled; by simply shutting of the pump 1008 any build up of pressures is completely avoided. Alternatively an additional fail-safe switching valve 1017 (open/close) located between the pump port and tank port might be considered as a further redundant device. When needed, the stability of the actuator motion in fail safe condition can be increased when the compartments are hydraulically separated by integrated damping means. This can be arranged, for example, by integrating damping means into the actuator ports in the form of small orifices or chokes 1018.

Figure 2 shows another exemplary pressure circuit 2000 for supplementary pressure supply, in particular, for a steering/lifting arrangement according to an aspect of the invention. To avoid unnecessary tire wear and to reduce the rolling resistance the wheels, it is desirable that a pusher axle of a truck can be steered and lifted. Usually the lifting function is realised by an additional air bellow device, mostly in combination with a complex lever and linkage mechanism. The advantage of air over hydraulics is that a pressurised air supply is always available in trucks. However, this drawback of applying hydraulics is no longer valid when, as in the embodiment according to Figure 1 a controllable power pack 1012, 1008 is already available. Moreover a hydraulic lifting actuator 2001 can be designed fairly compact due to the higher operating pressure. The packaging of an air bellow based system is mostly a large design problem within this respect.

To enable the lifting and steering function on the basis of one shared power pack, the system according to Figure 2 is proposed. A supplementary actuator 2001 is hydraulically switched to a supplementary pressure supply terminal 2005 provided in the pressure circuit. The supplementary pressure supply terminal 2005 is coupled in parallel to the first and second pressure control modules 1009, 1010. In non-lifted condition a switching valve 2006 is closed and the steering system 2002 can be operated as previously described. When in use, the steering controller controls the first and second pressure control modules 1009, 1010 to provide pressure to the supplementary actuator system 2001 while balancing the steering actuator 2002.

When lifting of the wheels is desired the switching valve 2006 is opened. Now the pressure in compartment 2005 can be built up using proportional control valves 1009 and 1010. To avoid simultaneous steering actions of the steering actuator 2002, the lifting (or pump) pressure needs to be generated with both valves activated simultaneously in proportion to the steering cylinder dimensions A1, A2. For the unique case that A2 = 2*A1 this means that the pressure drop which is generated by the first valve 1009 is equal to that of the second valve 1010, resulting in a situation where the hydraulic forces acting on the piston 2023 compensate each other. Note that in this particular case the pressure in the piston sided compartment amounts half of the pump pressure and the rod sided piston is submitted to full pump pressure. Small deviations from this average point of equilibrium during lifting are allowed to enable a closed loop position control the steered wheels (feedback control using information from the steering angle sensor).

Advantageously the supplementary actuator 2001 comprises a return mechanism 2003 to ensure a normally retracted position that is mechanically uncoupled to the axle in a non-lifted condition. By way of example, the actuator 2001 is provided with an integrated return steel coil spring 2003 ensuring a fully contracted position of the plunger when no pressure is present in its working compartment. Consequently a suspension design can be achieved where the plunger 2004 has no contact with the wheels when not lifted, eliminating all disturbing forces originating from friction, unsprung masses, etc.... This feature optimises the ride comfort performance of the suspension assembly. With an air based system mostly contact with the lifting bellow (containing a little rest pressure) remains in non-lifted condition. This not only diminishes ride comfort, but also poses further problems with regard to tuning of the main suspension springs.

When the wheels are completely lifted the switching valve 2006 is closed again and the power pack can be shut down, advantageously minimising the fuel consumption of the vehicle driveline which is caused by losses of auxiliaries. Accordingly, in a lifted condition, the supplementary actuator 2001 may be switched off from the pressure circuit 2000. The enclosed pressure in the lifting cylinder 2001 forces the suspension in his upper bump stops, enabling a firm lifted position of the wheels. Desirably a leakage-free switching valve is applied as this avoids a slowly slumping of the wheels. On the other hand this process can be influenced by selection of the proper flexible hoses between the valve and plunger (= hydraulic buffer) and/or switching the power pack on from time to time.

The switching valve 2006 and the two proportional pressure control valves 1009, 1010 can be integrated in one valve block (housing, manifold). To increase the accuracy of the computer controlled pressure control system 2000 an additional pressure sensor (also integrated in the valve block) at the pump port 1005 and/or a second pressure sensor at the consumer port 1004 (see Figure 1) between the pressure control valves can be provided. The valve block itself might even be part of the power pack, further reducing the package, weight and complexity of the total system set up.

For the sake of further reducing the number of components in the system assembly the supplementary actuator can be provided as a hydraulic damper system 3000 that mechanically dampens the axle. Accordingly, available suspension dampers 3001, 3002, instead of an additional hydraulic plunger 2001, might be used for lifting of the wheels. For this purpose the dampers 3001, 3002 have to be implemented such into the suspension that their activation is reversed. Specifically this means that a contraction corresponds to rebound motion of the wheels and an expansion to the bump motion of the wheels. In practice the dampers may be built into the chassis upside down, which is not obvious in terms of packaging.

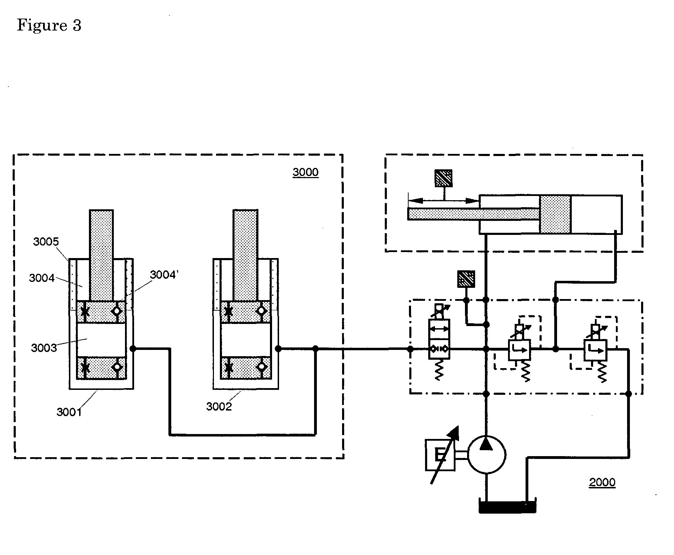

In Figure 3 an embodiment is disclosed wherein the hydraulic damper system 3000 comprises a pressure cylinder 3001 having a rod sided compartment 3004 and a piston sided compartment 3003 in fluid communication with each other and further coupled to a gas expansion compartment 3005, the rod sided effective force transmission area being asymmetric relative to the piston sided force transmission area so that pressure increase results in lifting actuation. Due to the inverted setup the damper effective rod area can be used to generate the required hydraulic lifting forces. The working mechanism is principally the same as described above for the hydraulic plunger 2001 in Figure 2.

The piston integrated dampers 3001, 3002 are tuned in correspondence to bump damping requirements and the bottom damping valves to rebound requirements. For the rest the functionality is identical to conventional twin tube dampers. Alternatively mono tube piston dampers can be considered.

The hydraulic network 2000 is preferably designed such that the lifting pressure is generated in the gas compartment 3005 of the damper 3001 (not directly into the working compartments 3003, 3004). This solution stimulates that the stiff working compartments remain unaffected, which is favourable for producing firm damping (no compliance). Advantageously the lifting pressure is built up and buffered in the gas compartment 3005 (robustness against eventual system leakages). Note that when lifting pressure is being generated all compartments 3003, 3004, 3005 have the same pressure, which explains how the effective rod area is used for the lifting function.

When the wheels are lifted it is desired that wheels keep fixed to a neutral steering position (small motions are allowed). This can be provided by a self centering mechanism such as an integrated reset spring and as previously discussed.

In the embodiment according to Figure 3 preferably, the rod area 3004' of the lifting actuator 3001 is used for the lifting function. The rod seal is designed such that it does not leak. Even if it would leak a little, the buffered, pressurised oil in the gas compartment would still lead to a robust design with this respect. This design overcomes a problem to make the piston free of leakage, without introducing high friction. In practice a need existed for keeping the hydraulic pump running (negative for energy consumption).

It is noted that, while the supplementary actuator is shown to provide a lifting action, the supplementary actuator can also be provided for other actuating purposes, such as the actuation of auxiliary hydraulic systems.

While the embodiments of following Figure 4 serve to further develop and enhance the inventive aspects previously disclosed, they additionally provide protection for embodiments irrespective of having a pressure fluid controlled steering actuator as previously described.

A side elevation of a truck vehicle 1, here in the form of a tractor unit, for pulling a trailer as an articulated lorry is illustrated in Figure 4. The truck 1 includes a chassis 3 and pairs of front wheels, trailing rear wheels and leading rear wheels represented by road wheels 5, 7, 9, respectively. The chassis 3 together with a driver cab 11 forms a vehicle structure that is in mobile support relative to a road surface 13 by at least a set of front wheels 5 and rear wheels 7. Figure 4 shows both the leading rear wheels 9 and the trailing set of rear wheels 7 in contact with the road surface 13. However the leading set of rear wheels 9 can be lifted from the road surface 13, while the trailing set of wheels 7 remain in contact with the road surface. The truck 1 illustrated in Figure 4 also has a trailer coupling 15 supported by its chassis 3. It should be clear to the skilled person that such a trailer coupling, popularly referred to as a "fifth wheel", is optional and that various transport ancillaries could be supported by the chassis 3. Also the chassis could have a different length subject to requirement. It is further seen in Figure 4 that the trailing set of rear wheel 7 are part of a driven main axle 17, which is driven by a propeller shaft 19, itself driven from a change-speed gear transmission 21.

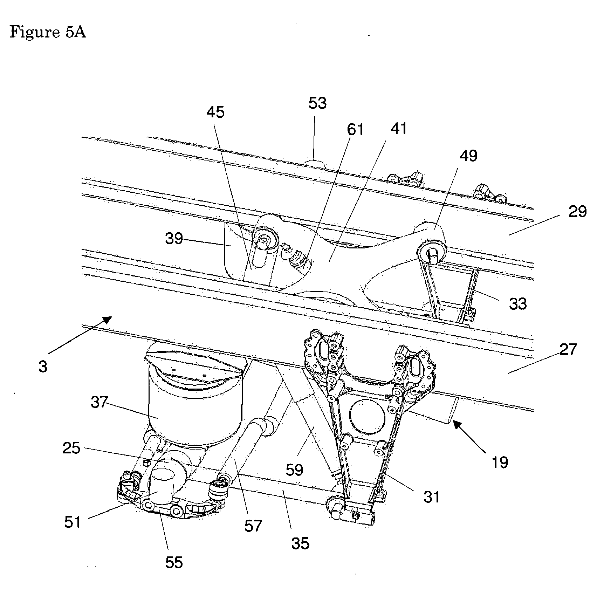

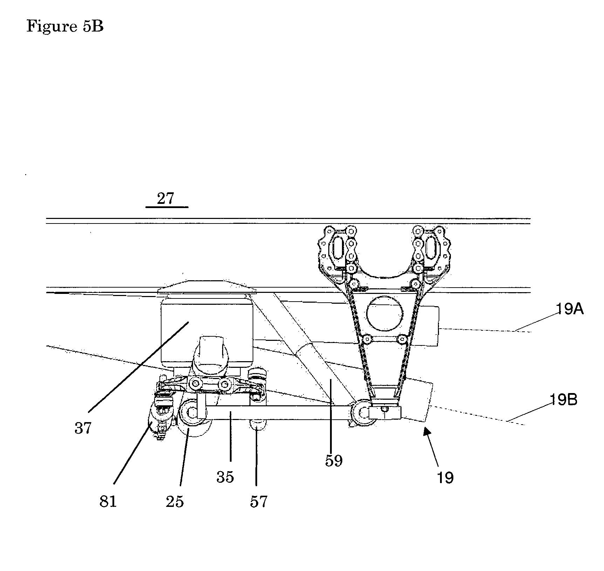

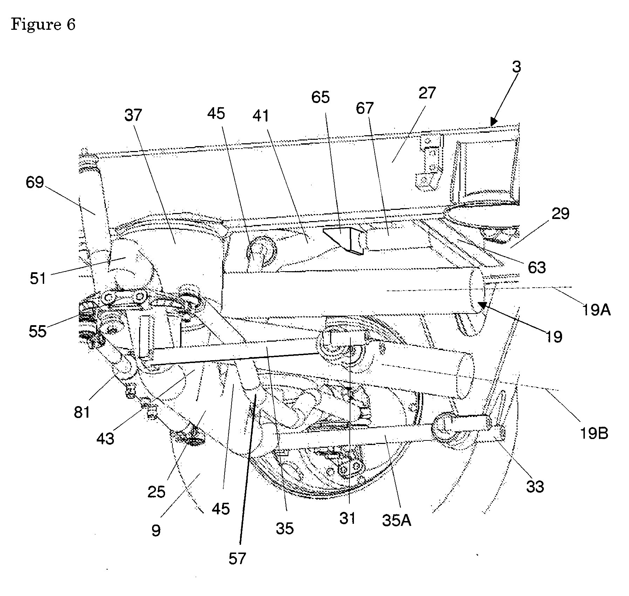

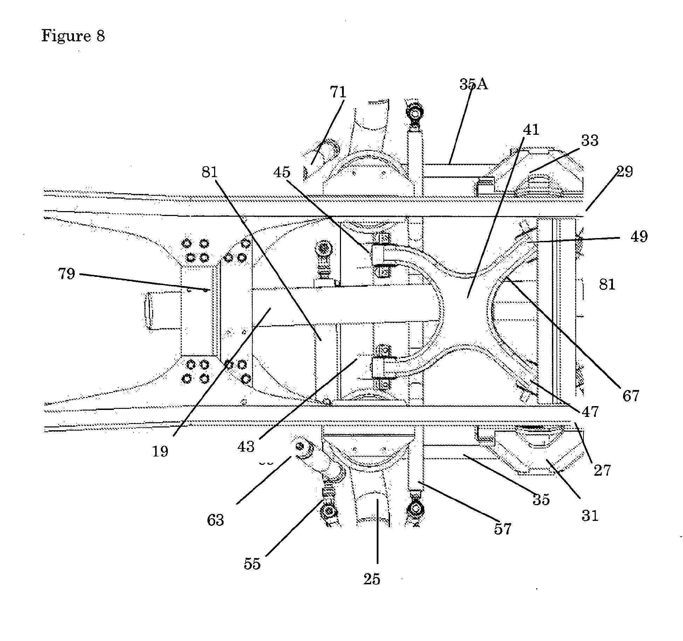

The liftable set of leading road wheels 9 are part of an ancillary axle 25 such as shown in Figures 5A and 5B. The ancillary axle 25 is guided and suspended relative to a vehicle structure represented in Figure 5A by opposite chassis rails 27, 29. Each of the opposite chassis rails is provided with a relevant one of a pair of opposite chassis brackets 31, 33. This pair of chassis bracket 31, 33 serves as an anchorage point for a relevant one of a pair of radius rods, of which only one, numeral 35, is visible in Figure 5A and 5B. The radius rod 35 guides the ancillary axle 25 is its vertical movement relative to the chassis rails 27, 29 but restrains the fore and off movement of ancillary axle 25 in respect of the chassis rails 27, 29. Suspension means in the form of volumetric displacement devices represented by gas springs 37, 39 are interposed between the ancillary axle 25 and the chassis rails 27, 29. To restrain lateral movement of the ancillary axle 25 in respect to the opposite chassis rails 27, 29 an upper linkage 41 is provided. The linkage 41 is articulated to the ancillary axle 25 through first and second upwardly extending column-like axle branches 43, 45. Only axle branch 45 is visible in Figure 5A, but reference to Figures 6, 8 and 12, will clarify the relationship of both axle branches 43 and 45 in more detail. An opposite end of the linkage 41 has first and second articulation joints 47, 49, with which the linkage is connectable to a chassis cross member. Again articulation joint 47 is not visible in Figures 5A and 5B, but is indicated in Figure 8. This chassis cross member, which interconnects the opposite chassis rails 27, 29 has been deleted from Figure 5 A for clarity. Normally such a cross beam as will be described in more detail below extends between the opposite chassis brackets 31, 33.

The ancillary axle 25 shown in Figure 5 A is a steerable axle and to this end is provided with opposite king pin bosses 51, 53 for each receiving a stub axle carrying a hub (deleted from Figure 5 for clarity). In order to pivot the stub axles and couple the left and right wheels, the ancillary axle 25 can also be provided with a steering arm 55 and a track rod 57, as seen in Figure 5 A. Volumetric displacement devices in the form of telescopic shock absorbers 59, 61 are diagonally arranged between a lower articulation at the chassis bracket 31, 33 and an upper articulation associated with the joints between the linkage 41 and the relevant ones of the first and second axle branches 43, 45. Lifting of the ancillary axle 25 as shown in Figure 5 A, is obtained by connecting the shock absorbers 59, 61 to an external supply of pressurized hydraulic fluid effective to increase the length between each shock absorber's anchorage points through an increase of the volumetric displacement. Thereby the ancillary axle 25 can be lifted from the road surface, provided that the vehicle structure remains to be supported from main axle adjacent to the ancillary lift axle 25.

The linkage 41 is preferably in the form of what is popularly referred to as a "quadrangle" or "four point link". Linkages in the form of such a quadrangle are well known in the art and are amongst others described in WO 01/45972 A1; EP 1 057 665 A1; US 6,129,367; and US 2007/0284841 A1. These quadrangle type linkages integrate the functions of a triangle linkage, a Watts linkage or a Panhard linkage, that is conventionally used to inhibit lateral movement of an axle relative to a vehicle structure, and a stabilizer bar that reduces body roll of a vehicle structure. In combination with the present invention the use of a quadrangle type linkage allows the elimination of a transverse torsion bar that is commonly used as an anti-roll stabilizer. Elimination of a transverse torsion bar creates more room for the propeller shaft 19 that passes over the ancillary axle 25. As a result the propeller shaft 19 can be an uninterrupted straight single drive shaft that can extend in various angular positions between 19A and19 B between the vehicle's change speed transmission 21 and its main drive axle 17 (see Figure 4). The extra room provided, amongst others, by elimination a transverse torsion bar also avoids the need for additional articulations, such as universal joints, and intermediate bearing supports for the drive or propeller shaft. In particular such advantages become important with the ancillary axle 25 in its lifted position. A further important aspect of the arrangement according to the invention is the elimination of the conventional lifting mechanism, using a rather large volumetric displacement air bellows device and its cooperating lifting arm. Additionally contributing to the extra space is also the elimination of the need for any additional Watts or Panhard linkages. These would normally also interfere with the available space above a vehicle axle.

When lifting the ancillary axle by means of telescopic shock absorbers 59, 61 it is of further advantage when gas springs 37, 39 are employed, from which the pressurized gas or air can be depleted during lifting and in lifted position.

Figure 6 shows a liftable ancillary axle very similar to Figure 5, but with a different axle lift mechanism. Hence, the same reference numerals will be used for similar parts and components. In short, Figure 6 shows partially cut away and partially in ghost view, a portion of a vehicle chassis 3 having opposite chassis rails 27, 29 and the road wheel 9 carried by the ancillary axle 25. The ancillary axle 25 is located in a fore-and off direction of the frame 3 by a pair of radius rods 35, 35A, which are articulated to chassis brackets 31, 33. Chassis bracket 31 is partly deleted from Figure 6 to show frame cross member 63 which extends between the frame brackets 31, 33 and the opposite chassis rails 27, 29. The cross member 63 also serves in pivotally anchoring the quadrangle type linkage 41 by articulation joints not visible in Figure 6. These articulation joints, numbered 47 and 49 are indicated in Figure 8. The ancillary axle 25 is located in a transverse direction of the chassis 3 by having upwardly extending axle branches 43, 45 articulated to an end of the linkage 41 opposite to the cross member 63.

The different axle lift mechanism of the variation of Figure 6 includes the linkage 41, which is modified by a projection 65 extending downwardly from the linkage 41. Positioned to engage the downward projection 65, a volumetric displacement device in the form of hydraulic actuator 67, which can lift the linkage 41 together with the ancillary axle 25 when operated to extend its volume by a pressurized supply of hydraulic fluid. When not used to lift the axle 25, the actuator 67 is preferably so arranged that there is no contact with the projection 65 within the range of normal suspended axle movement. In this arrangement the shock absorbers 69 (of which only one is visible in Figure 6) can be of a passive type and can be arranged in a position that can be more favourable to a damping of the axle and spring movements.

As in Figure 5B, Figure 6 also shows different positions for the propeller shaft 19, 19A and 19B, allowed by the available space above the ancillary axle 25 and between its upstanding axle branches 43, 45. Also the ancillary axle 25 of Figure 6 is a steerable axle and thus is also provided with king pin bosses, such as 51, steering arms such as 55, and a track rod 57 which can be cranked in the middle to further increase the spacing for the propeller shaft 19.

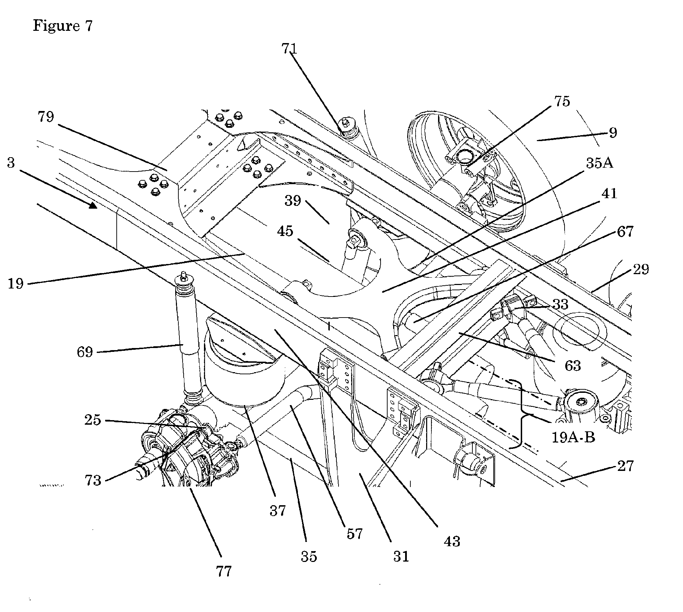

The lift axle arrangement of Figure 6 is shown in further detail in Figure 7 in a perspective view from above. In this view the second shock absorber 71 is visible and the ancillary axle 25 is provided with stub axle and hub assemblies generally indicted as 73, 75, at both lateral ends of the axle 25. The stub axle assemblies 73, 75 in this example are articulated to the axle ends to provide for steerability. The stub axle and hub assembly 73 on the near side as shown in Figure 7 is also provided with a disc brake caliper 77, visible by deletion of the nearside wheel. A similar brake provision will also be attached to the offside stub axle/hub assembly 75, but this has been deleted from Figure 7 for clarity. The other components visible in Figure 7 and numbered in accordance with the previous Figures 5 and 6 are considered self-explanatory and making a repetitive description redundant. Suffice it to indicate with respect to Figure 7 that the chassis frame 3 may be provided with additional cross braces, such as indicated by reference numeral 79.

A further view of the ancillary axle 25 assembly is provided in Figure 8 as a top plan view. Clearly visible in Figure 8 is another volumetric displacement device, in the form of hydraulic work cylinder or actuator 81 which may be employed to operate the steering arm 55 to steer the steerable ancillary axle 25. While the hydraulic work cylinder 81 is illustrated in an arrangement where it extends in parallel to the ancillary axle 25, it is equally effective to position the cylinder 81 to be parallel to the chassis rail 27, while using an adapted form of steering arm 55. When parallel to one of the chassis rails the actuator cylinder 81 may also be coextensive with the radius rod 35 and also be linked to the chassis bracket 31 or like structure. Whatever the arrangement of the cylinder 81, it is of particular advantage to use hydraulic steering in combination with hydraulic lifting of the ancillary axle 25. One advantageous aspect is that hydraulic steering reduces the mechanical complexity of a steerable ancillary axle, in comparison to mechanical steering of such axles through complex steering linkages. Similar consideration applies to mechanical lifting systems of the prior art using lifting yokes and pneumatic lifting bellows. The hydraulic operating system proposed by the invention can be much more compact and is also more versatile in its application across a varied range of vehicles. With, for instance, different chassis lengths, the only required difference will be in the length of the hydraulic supply lines. Alternatively an electrically powered hydraulic pump, popularly referred to as "power pack", may be arranged in the direct vicinity of the hydraulic operating system. Such an alternative arrangement can also be easily adapted to different chassis lengths by varying the length of the electrical wiring.

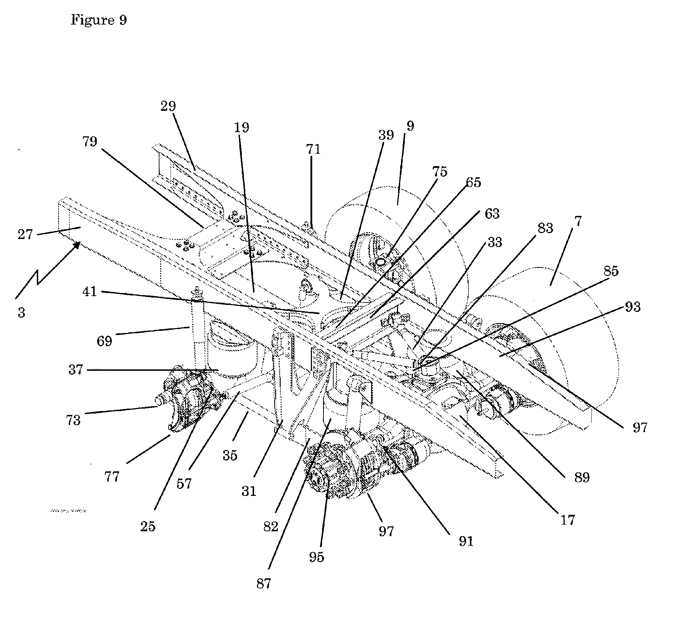

Figure 9 shows an entire axle assembly incorporating the liftable ancillary axle arrangement described in reference to Figures 6 to 8. Again any wheels on the nearside to the chassis 3 in Figure 9 are deleted for clarity. The main drive or live axle 17 of the truck (1 in Figure 4) can be guided in respect of the chassis 3 by the same chassis brackets 31, 33 and the same cross member 63 as the ancillary axle 25. To this end an additional pair of radius rods 82, 83 may be anchored to the lower ends of chassis brackets 31, 33. Similarly, a further upper linkage 85 of the quadrangle type, may be anchored at one end to the cross member 63 and at an opposite end to the main axle 17. The main axle 17 may have any one of active or passive suspension elements, such as schematically represented by reference numerals 87, 89 operatively interposed between the main axle 17 and the relevant one of the chassis rails 27, 29. Such operatively interposing can include an airspring bellows inserted between a prolongation of each the longitudinal radius rods 82, 83, extending beyond the main axle 17, and the relevant one of the chassis rails 27, 29. In the present arrangement passive suspension elements of the gas spring variety are preferred. In addition to the suspension elements 87, 89 the main axle 17 may also be provided with shock absorbers 91, 93. The main axle 17 as seen in Figure 9 is driven by the propeller shaft 19. As further shown in Figure 9, the main axle 17 is also provided with a hub 95 and disc brake assembly 97. As understood by the skilled person, the disc brakes shown in the example as described are not a requirement to the invention, which will be equally effective in combination with more conventional drum brakes.

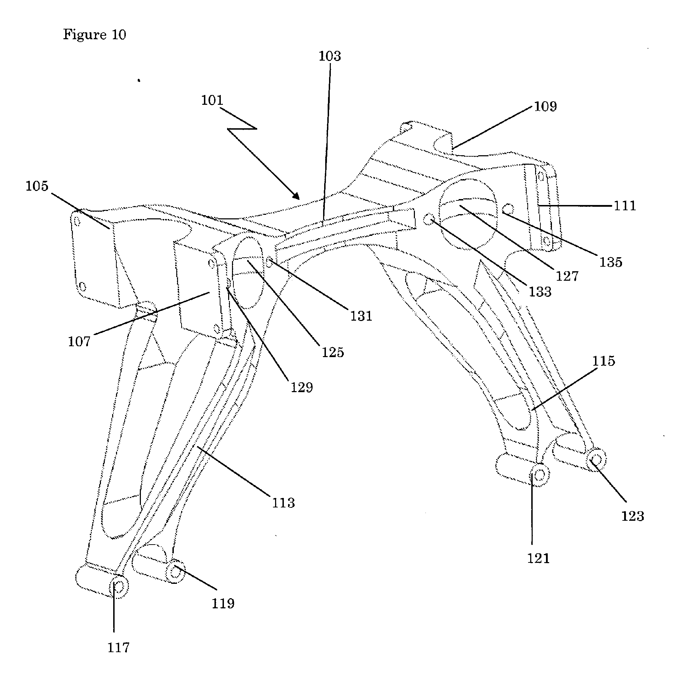

For a further embodiment of the invention it is proposed to combine the functions of the chassis brackets 31, 33 and the chassis cross member 63 of Figures 5 to 9, into an integrated unitary central carrier 101, as shown in Figure 10. This central unitary carrier 101 has a web portion 103 that effectively functions as a chassis cross member. Opposite ends of the web portion 103 carry flanges 105, 107, 109, 111 suitably drilled to receive fasteners for being attached between webs of opposite chassis rails (such as chassis rails 27, 29 of the Figures 5-9). Depending from the web portion 103 are first and second bracket arms 113, 115 each having anchorage bores 117, 119, and 121, 123 at their lower ends. The anchorage bores 117, 119, 121, 123 are adapted to receive an articulated connection of the radius rods 35, 35A and 82, 83 of the relevant ancillary and main axles 25, 17 (see Figure 9). Suitable articulated connections may be those of the elastomeric ball-and-socket joints, commonly referred to as so-called molecular joints. The web portion 103 is provided with cavities 125, 127. The cavities 125, 127 have anchoring bores 129, 131 and 133, 135 respectively for receiving similar articulated connections of the upper linkages (41 and 85 in Figure 9). The unitary central carrier 101 can be suitably formed as either a casting, such as an alloy casting, or as a forging from a suitable metal, including steel and aluminum. Alternatively the central carrier 103 may also be formed by welding together of sheet and/or bar stock metal.

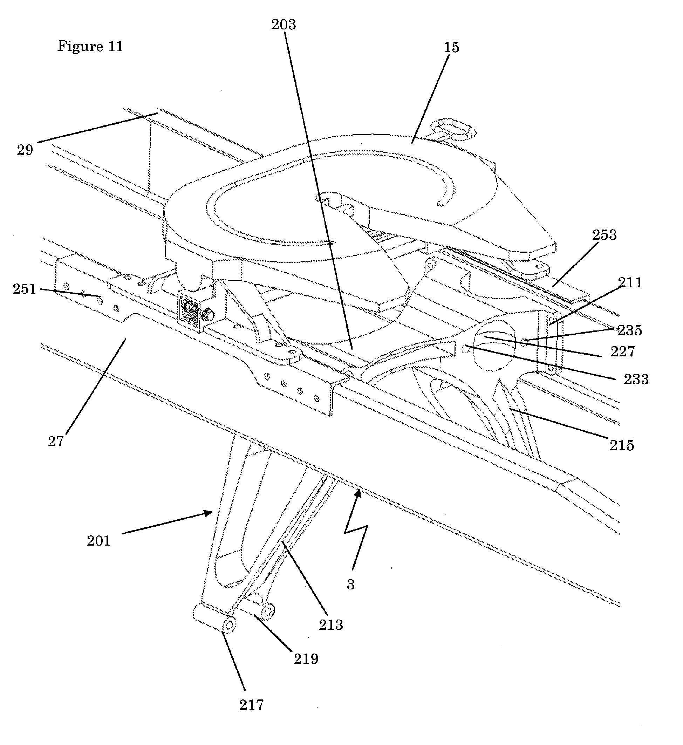

In Figure 11 an integrated unitary central carrier 201, of substantially similar design to that of Figure 10, is shown, being mounted between the opposite chassis rails 27, 29 of a vehicle structure. Reference numerals differing a full "100" with those used in Figure 10, are used in Figure 11 to denote similar elements of the unitary central carrier 201. Except for a somewhat lightened design the unitary carrier 201 in all essential aspects corresponds to the unitary carrier 101 of Figure 10. Accordingly the unitary carrier 201 has a central web portion 203 and mounting flanges, such as 211, for being mounted between opposite chassis rails 27, 29. Two bracket arms 213, 215 are depending from the central web portion 203 and have anchorage bores, such as 217, 219 for receiving articulated connections of lower radius rods. The central web portion 203 is provided with cavities such as 227, and anchoring bores such as 233, 235 for receiving articulated connections of an upper linkage such as a quadrangle linkage.

Further shown in Figure 11 is that the mounting position of the trailer coupling 15 (see also Figure 4) coincides with the central web portion 203 of the unitary central carrier 201. This arrangement is particularly favorable for distribution of loads into the chassis 3. While in the arrangement shown in Figure 11 the trailer coupling is attached to and supported from adjacent regions of chassis rails 27, 29 by mounting profiles 251, 253 it is also conceivable to support the trailer coupling 15 additionally or solely from the central web 203 of the unitary carrier 201. Alternatively the mounting profiles 251, 253 may be arranged to be mounted to the relevant chassis rails 27, 29 by the same fasteners or bolts that attach the integrated central carrier 201 thereto.

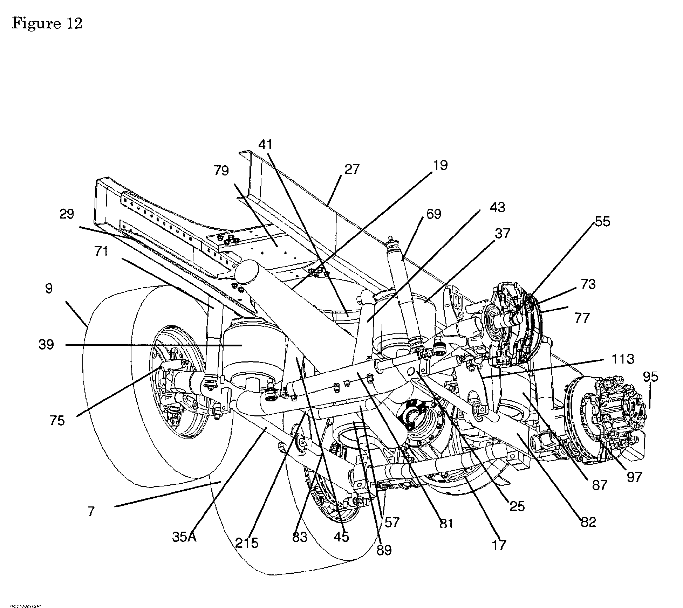

A rear portion of the vehicle structure's chassis carrying an axle assembly more or less similar to Figure 9 in combination with the unitary central carrier of Figure 10 as viewed from below, is shown in Figure 12. The axle assembly has the road wheels 7 and 9, in respective complementary pairs, to provide mobile support relative to a road surface (not shown in Figure 12). The driven main axle 17 extends between a first pair of opposite hubs, hub 95 being visible by deletion of the road wheel from this end of the main axle 17. The road wheel 7 is one of a first pair of road wheels associated with the main axle 17. The ancillary axle 25 is mounted in front of the main axle 17 and thereby being leading in the normal direction of forward movement of the vehicle. The ancillary axle 25 extends between a second pair of road wheels, of which only the road wheel 9 is shown in Figure 12. Each wheel of the second pair of road wheels is supported for rotation on the articulated stub axle assemblies 73, 75. Steering of the articulated stub axle assemblies 73, 75 is accomplished through the hydraulic work cylinder 81 acting on steering arm 55 attached to hub carrying stub axle assembly 73, which through track rod 57 also engages the opposite stub axle assembly 75. Suspension means in the form of the air spring bellows 87, 89 are operatively interposed between the main axle 17, i.e. through the relevant radius rods 82, 83, and the confronting nearest chassis rails 27, 29. Similarly air spring bellows 37, 39 are operatively interposed between the ancillary axle 25 and the confronting nearest chassis rails 27, 29. Means for guiding the movement of the main axle 17 includes a first pair of arms formed by the radius rods 82, 83 articulated from the depending bracket arms 113, 115 of the unitary central carrier. The guiding means of the main axle 17 further includes a first upper linkage, formed by the quadrangle 85 which is not visible in Figure 12. In an alternative arrangement, as shown in Figure 12, the radius rods 82, 83 may be formed as flexible arms of a sway bar and be interconnected by a transverse tube. In this particular case the upper quadrangle may be replaced by a triangle, or other suitable transverse guiding means for the axle. In the particular example of Figure 12, where the radius rods 82, 83 are in the form of sway-bar arms, these arms are preferably formed as flat flexible elements. These flat arms are relatively flexible when deflected perpendicular to their main plane, but relatively rigid when deflected within their main plane. Such radius arms are particularly favourable in combination with the integrated central carrier. The guiding means for the ancillary axle 25 include a second pair of rods, formed by radius rods 35, 35A and a second upper linkage, formed by the quadrangle 41.

Shock absorbers such as the shock absorbers 69, 71 indicated in Figure 12, and 91, 93 of the main axle (not visible in Figure 12, but visible in Figure 9), are associated with each individual suspension element, i.e. the gas spring bellows 37, 39, 87, and 89 to dampen the movement of the vehicle structure relative to the axles. The ancillary axle 25 is liftable by means as already explained in reference to Figures 6 to 9 but not visible in Figure 12. The main axle is driven by propeller shaft 19 which passes over the ancillary axle 25 with a spacing sufficient to allow the ancillary axle 25 to be raised without interfering with the movement of the drive shaft 19.

Accordingly the axle assembly according to the invention may have exemplary embodiments in which one or more of the following features are present:
the first volumetric displacement device is a hydraulic piston and cylinder assembly;
the first volumetric displacement device is a shock absorber;
the first volumetric displacement device is a hydraulic actuator;
the second pair of hubs are articulated to the ancillary axle to render the second pair of wheels steerable;
the second pair of wheels is adapted to be controlled by a supply of pressurised hydraulic fluid;
the ancillary axle includes a steering linkage;
the first pair of hubs on the main axle is arranged to be driven by a motive force;
the axle assembly is adapted for mounting to a rear portion of a vehicle structure;
the axle assembly is adapted to be attached as a unit to a vehicle structure comprising a pair of opposite chassis rails, so as to act as a chassis cross member;
the ancillary axle is adapted to form a leading axle and the main axle is adapted to form a trailing axle;
the ancillary axle is arranged to permits a propeller shaft of a vehicle structure to be drivingly connectable to the main axle in an uninterrupted straight line by a single, one-piece unarticulated drive shaft from a transmission exit on the vehicle structure;
the suspension means includes one of an active and a passive suspension element;
the suspension means is a passive, resilient suspension element;
the resilient suspension element includes a mechanical spring;
the resilient suspension element includes at least one second volumetric displacement device;
the at least one second volumetric displacement device is a gas spring;
a first pair of second volumetric displacement devices formed as gas springs is associated with the main axle and a second pair of second volumetric displacement devices in the form of gas springs is associated with the ancillary axle;
the suspension means is an active suspension element, which includes at least one second volumetric displacement device;
the guiding means comprises a first pair of radius rods for guiding movement of the main axle and a second pair of radius rods for guiding movement of the ancillary axle to allow vertical movement of each of the main and ancillary axles, but to restrain their fore and aft movement relative to a vehicle structure;
the guiding means further include at least one stabiliser for stabilising roll of a vehicle structure relative to a road surface, the at least one stabiliser being associated with one of the main and ancillary axles;
the guiding means further include a first linkage associated with the main axle and a second linkage associated with the ancillary axle each of the first and second linkages being adapted for restraining lateral movement of a respective one of the main and ancillary axles relative to a vehicle structure, while permitting vertical movement thereof; and/or
the at least one stabiliser is formed by one of the first and second linkages being in the form of a quadrangle;

In particular the axle assembly according to the invention may comprise an integrated central carrier providing anchorage for the first and second pairs of radius rods and the first and second linkages, optionally including also one or more of the features:
the integrated central carrier is formed as one of a casting and a forging;
the axle assembly is adapted to be attached as a unit to a vehicle structure comprising a pair of opposite chassis rails, so as to act as a chassis cross member; and/or
the hydraulic actuator engages directly the second linkage.

The invention is also directed to a lift axle arrangement suitable for cooperation with and for incorporation into an axle assembly as specified above.

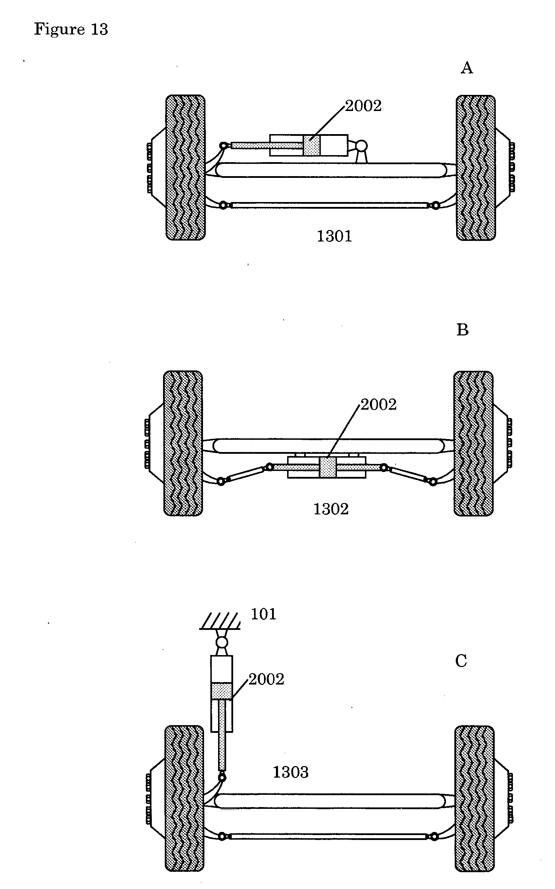

Figure 13A-C shows a variety of embodiments having a pressure fluid controlled steering actuator 2002 mechanically coupled to the steering arrangements 1301-1303. In particular, an arrangement having the actuator 2002 mounted between the carrier 101 and a stub limits necessary hydraulic tubing.

Instead of a series connection of pressure relief valves a series connection of two-way pressure reduction valves could be used. In that case the pump - when not already protected by e.g. an internal pressure relief valve - should be protected by a pressure relief valve connected with the pump's outlet and inlet (so in parallel with the pump) or with the pump's outlet side and the tank's inlet side (so in parallel to the series connection of pump and tank).

The pump- when not already protected by e.g. an internal pressure relief valve - is preferably be protected against overpressure. Moreover, the pump should be provided with energy saving means, viz. by limiting the pump's pressure to the requested pressure at each moment. Both, overpressure protection and energy saving can be realized by means of a pressure relief valve connected with the pump's outlet and inlet (so in parallel with the pump) or with the pump's outlet side and the tank's inlet side (so in parallel to the series connection of pump and tank). Such a protecting pressure relief valve could be comprised by the pressure control module, or could be separate from it.

## Claims

1. Axle assembly for providing mobile support to a vehicle structure relative to a road surface, the axle assembly comprising:
- a co-steered axle (25) comprised of wheels (9) and steering arrangements (1301-1303) for steering the wheels;
- a hydraulic pressure circuit (1000, 2000) comprised of a hydraulic fluid pump (1008); first and second pressure control modules (1009, 1010); first and second pressure supply terminals (1004, 1005) arranged at respective locations in the circuit; and a hydraulic fluid reservoir (1011);
- a pressure fluid controlled steering actuator (1001, 2002) mechanically coupled to the steering arrangements; and comprising first and second actuator compartments (1002, 1003) hydraulically connected via respective first and second pressure supply terminals (1004, 1005); said wheels comprising a self centering mechanism active in the absence of pressure supply in the hydraulic pressure circuit; and
- a steering controller arranged to control said pressure control modules in correspondence with steering signals received from a main steering unit; **characterized in that**
- said first and second pressure supply terminals (1004, 1005) are connected via at least the first pressure control module (1009); the first pressure control module coupled in series with the second pressure control module (1010); and wherein
- a fail safe mechanism (1006) is provided arranged to release, in a fail condition, first and second pressure control modules (1009, 1010) to thereby provide a pressureless hydraulic connection between the actuator compartments.

2. Axle assembly according to claim 1, wherein the fail safe mechanism (1006) further comprises a fluid pump shut-off system and/or a shortcut valve (1017) to release the pressure in the hydraulic pressure circuit.

3. Axle assembly according to claim 1, wherein small orifices (1018) that serve as damping means are integrated in the hydraulic ports or pipe lines of the steering actuator (1001).

4. Axle assembly according to claim 1, wherein the pressure control modules (1009, 1010) each comprise a proportional pressure control valve selectively controlled between normally open pass through condition, inducing a limited pressure drop; and a choke condition, inducing increased pressure drop; and the fail safe mechanism arranged for resetting the valve to the normally open condition.

5. Axle assembly according to claim 1, wherein the pressure control modules (1009, 1010) are designed to provide a proportional pressure drop between first and second pressure control modules that is in correspondence to respective asymmetrically designed effective force transmission areas (1002', 1003') in the actuator compartments to result in a substantially symmetrically loaded steering force to either steering direction of the wheels (9).

6. Axle assembly according to claim 1, wherein the hydraulic fluid pump (1008) is an electrically controlled hydraulic fluid pump.

7. Axle assembly according to claim 1, wherein the self centering mechanism is provided by having the wheel (9) contact point trailing behind the wheel suspension and/or by a self centering spring mechanically centering the wheels.

8. Axle assembly according to claim 1, further comprising a supplementary actuator (2001) hydraulically switched to a supplementary pressure supply terminal (2005) provided in the pressure circuit (2000);
wherein the supplementary pressure supply terminal is coupled in parallel to the first and second pressure control modules (1009, 1010) and wherein the steering controller (1006) controls the first and second pressure control modules to provide pressure to the supplementary actuator system (2001) while balancing the steering actuator (2002).

9. Axle assembly system according to claim 8, wherein the supplementary actuator comprises a return mechanism (2004) to ensure a normally retracted position that is mechanically uncoupled to the axle (25) in a non-lifted condition; and wherein, in a lifted condition, the supplementary actuator (2001) is switched off from the pressure circuit (2000).

10. Axle assembly system according to claim 8, wherein the supplementary actuator is provided as a hydraulic damper system (3000) that mechanically dampens the axle (25).

11. Axle assembly system according to claim 10, wherein the hydraulic damper system (3000) comprises a pressure cylinder having a rod sided compartment (3004) and a piston sided compartment (3003) in fluid communication with each other and further coupled to a gas damping compartment (3005), the rod sided effective force transmission area (3004') being asymmetric relative to the piston sided force transmission area so that pressure increase results in lifting actuation.

12. Axle assembly system according to claim 8, wherein the axle assembly further comprises:
- a main axle (17) connecting a first pair of hubs (95) and a first pair of wheels (9) each carried for rotation on a respective one of the first pair of hubs;
- the co-steered axle (25) as ancillary axle associated with the main axle, connecting a second pair of pair of hubs and a second pair of wheels (9) each carried for rotation on a respective one of the second pair of hubs;
- suspension means adapted to be interposed between each of the main (17) and ancillary axle (25) and a vehicle structure (27, 29);
- guiding means for guiding movement of each of the main and ancillary axle relative to a vehicle structure (27, 29);
- wherein the supplementary actuator (2001) is selectively effective in moving the ancillary axle (25) relative to the main axle (17), so as to lift it from a road surface.

13. Axle assembly according to claim 12, wherein the ancillary axle (25) is arranged to permit a propeller shaft (19) of a vehicle structure to be drivingly connectable to the main axle (17) in an uninterrupted straight line by a single, one-piece unarticulated drive shaft from a transmission exit on the vehicle structure.

14. Axle assembly according to claim 12, wherein the guiding means comprises a first pair of radius rods (35, 35A) for guiding movement of the main axle and a second pair of radius rods (82, 83) for guiding movement of the ancillary axle to allow vertical movement of each of the main and ancillary axles (17, 25), but to restrain their fore and aft movement relative to a vehicle structure (27, 29); wherein the guiding means further include at least one stabiliser for stabilising roll of a vehicle structure relative to a road surface, the at least one stabiliser being associated with one of the main and ancillary axles (17, 25); and wherein the guiding means further include a first linkage (33) associated with the main axle and a second linkage (41) associated with the ancillary axle each of the first and second linkages being adapted for restraining lateral movement of a respective one of the main and ancillary axles (17, 25) relative to a vehicle structure, while permitting vertical movement thereof; the at least one stabiliser formed by one of the first and second linkages being in the form of a quadrangle (41).

15. Axle assembly according to claim 12, further comprising an integrated central carrier (101) providing anchorage for the first and second pairs of radius rods (35, 35A, 82, 83) and the first and second linkages.

## Patentansprüche

1. Achsaggregat zur Bereitstellung von mobiler Unterstützung für eine Fahrzeugstruktur in Bezug auf eine Straßenoberfläche, umfassend:
- eine servogelenkte Achse (25), bestehend aus Rädern (9) und Lenkanordnungen (1301-1303) zum Lenken der Räder.
- einen Hydraulikdruckkreis (1000, 2000), bestehend aus einer Hydraulikflüssigkeitspumpe (1008); ersten und zweiten Druckregelmodulen (1009, 1010); ersten und zweiten Druckversorgungsendgeräten (1004, 1005), angeordnet an entsprechenden Positionen im Kreis; und einem Hydraulikflüssigkeitsreservoir (1011);
- ein durch Druckflüssigkeit gesteuertes Lenkbetätigungselement (1001, 2002), das mechanisch an die Lenkanordnungen gekoppelt ist; und umfassend erste und zweite Betätigungskammern (1002, 1003), die hydraulisch über jeweils erste und zweite Druckversorgungsendgeräte (1004, 1005) verbunden sind; wobei die Räder einen Selbstzentriermechanismus umfassen, der bei fehlender Druckversorgung im Hydraulikdruckkreis aktiv ist; und
- einen Lenk-Controller, angeordnet zum Steuern der Drucksteuermodule in Übereinstimmung mit Lenksignalen, empfangen von einer Hauptlenkvorrichtung; **dadurch gekennzeichnet, dass**
- das erste und das zweite Druckversorgungsendgerät (1004, 1005) über mindestens das erste Drucksteuermodul (1009) verbunden sind; das erste Drucksteuermodul in Reihe mit dem zweiten Drucksteuermodul (1010) geschaltet ist; und wobei
- ein Ausfallsicherungsmechanismus (1006) bereitgestellt ist, der geeignet ist, um bei einem Fehlerzustand die ersten und zweiten Drucksteuermodule (1009, 1010) zu lösen, um so für eine drucklose Hydraulikverbindung zwischen den Betätigungskammern zu sorgen.

2. Achsaggregat nach Anspruch 1, wobei der Ausfallsicherungsmechanismus (1006) ferner ein Hydraulikpumpen-Abschaltsystem und/oder ein Absperrventil (1017) umfasst, um den Druck in dem Hydraulikdruckkreis zu entlasten.

3. Achsaggregat nach Anspruch 1, wobei kleine Öffnungen (1018), die als Dämpfungsmittel dienen, in die Hydraulikanschlüsse oder Rohrleitungen des Lenkbetätigungselements (1001) integriert sind.

4. Achsaggregat nach Anspruch 1, wobei die Drucksteuermodule (1009, 1010) jeweils ein proportionales Drucksteuerventil, selektiv gesteuert zwischen einem normalerweise geöffnetem Durchgangszustand, der einen begrenzten Druckabfall herbeiführt; und einem Drosselzustand, der einen erhöhten Druckabfall herbeiführt; und den Ausfallsicherungsmechanismus, geeignet zum Zurücksetzen des Ventils in den normalerweise geöffneten Zustand, umfasst.

5. Achsaggregat nach Anspruch 1, wobei die Drucksteuermodule (1009, 1010) konzipiert sind, um zwischen den ersten und zweiten Drucksteuermodulen einen proportionalen Druckabfall, übereinstimmend mit entsprechenden asymmetrisch konzipierten effektiven Kraftübertragungsbereichen (1002', 1003') in den Betätigungskammern, zu bewerkstelligen, was in einer im Wesentlichen symmetrisch belasteten Lenkkraft auf beide Lenkrichtungen der Räder (9) resultiert.

6. Achsaggregat nach Anspruch 1, wobei die Hydraulikflüssigkeitspumpe (1008) eine elektrisch gesteuerte Hydraulikflüssigkeitspumpe ist.

7. Achsaggregat nach Anspruch 1, wobei der Selbstzentriermechanismus bereitgestellt wird, indem der Kontaktpunkt des Rades (9) hinter der Radaufhängung nachläuft und/oder indem ein selbstzentrierender Federmechanismus mechanisch die Räder zentriert.

8. Achsaggregat nach Anspruch 1, ferner umfassend ein zusätzliches Betätigungselement (2001), das hydraulisch zu einem in dem Druckkreis (2000) bereitgestellten zusätzlichen Druckversorgungsendgerät (2005) geschaltet ist; wobei das zusätzliche Druckversorgungsendgerät parallel zu den ersten und zweiten Drucksteuermodulen (1009, 1010) geschaltet ist und wobei der Lenk-Controller (1006) die ersten und zweiten Drucksteuermodule steuert, um Druck für das zusätzliche Betätigungssystem (2001) bereitzustellen, während das Lenkbetätigungselement (2002) ausbalanciert wird.

9. Achsaggregatsystem nach Anspruch 8, wobei das zusätzliche Betätigungselement einen Rückführmechanismus (2004) umfasst, um eine normalerweise zurückgezogene Position sicherzustellen, die in einem nicht angehobenen Zustand mechanisch von der Achse (25) losgekoppelt ist; und wobei, in einem angehobenen Zustand, das zusätzliche Betätigungselement (2001) vom Druckkreis (2000) abgeschaltet wird.

10. Achsaggregatsystem nach Anspruch 8, wobei das zusätzliche Betätigungselement als ein hydraulisches Dämpfersystem (3000), das die Achse (25) mechanisch dämpft, bereitgestellt ist.

11. Achsaggregatsystem nach Anspruch 10, wobei das hydraulische Dämpfersystem (3000) einen Druckzylinder mit einer stangenseitigen Kammer (3004) und einer kolbenseitigen Kammer (3003), die in Fluidkommunikation miteinander sind und ferner an eine Gasdämpfungskammer (3005) gekoppelt sind, umfasst, wobei der stangenseitige effektive Kraftübertragungsbereich (3004') asymmetrisch zum kolbenseitigen Übertragungsbereich ist, sodass eine Druckzunahme in einer Hubbetätigung resultiert.

12. Achsaggregatsystem nach Anspruch 8, wobei das Achsaggregat ferner umfasst:
- eine Hauptachse (17), die ein erstes Paar Naben (95) und ein erstes Paar Räder (9), jedes getragen zum Drehen auf einem entsprechenden des ersten Nabenpaares, verbindet;
- die servogelenkte Achse (25) als der Hauptachse zugeordnete Nebenachse, die ein zweites Paar Naben und ein zweites Paar Räder (9), jeweils getragen zum Drehen auf einem entsprechenden des zweiten Nabenpaares, verbindet;
- Aufhängungsmittel, geeignet um zwischen der Haupt- (17) bzw.
Nebenachse (25) und einer Fahrzeugstruktur (27, 29) eingefügt zu werden;
- Führungsmittel zum Führen der Bewegung von der Haupt- bzw. der Nebenachse in Bezug auf eine Fahrzeugstruktur (27, 29);
- wobei das zusätzliche Betätigungselement (2001) selektiv wirksam ist, die Nebenachse (25) in Bezug zur Hauptachse (17) so zu bewegen, dass sie von einer Straßenoberfläche abgehoben wird.

13. Achsaggregat nach Anspruch 12, wobei die Nebenachse (25) geeignet ist, es einer Propellerwelle (19) einer Fahrzeugstruktur zu ermöglichen, treibend verbindbar mit der Hauptachse (17) in einer ununterbrochenen geraden Linie durch eine einzelne, einteilige, nicht gelenkig gelagerte Antriebswelle von einem Getriebeausgang auf der Fahrzeugstruktur zu sein.

14. Achsaggregat nach Anspruch 12, wobei die Führungsmittel ein erstes Paar von Radiusstangen (35, 35A) zur Führung der Bewegung der Hauptachse und ein zweites Paar von Radiusstangen (82, 83) zur Führung der Bewegung der Nebenachse umfassen, um die vertikale Bewegung der Haupt- und Nebenachsen (17, 25) zu erlauben, aber um deren vordere und hintere Bewegung in Bezug auf eine Fahrzeugstruktur (27, 29) zu hemmen; wobei die Führungsmittel ferner mindestens einen Stabilisator umfassen, um das Rollen einer Fahrzeugstruktur in Bezug auf eine Straßenoberfläche zu stabilisieren, wobei der mindestens eine Stabilisator einer der Haupt- und Nebenachsen (17, 25) zugeordnet ist; und wobei die Führungsmittel ferner eine zu der Hauptachse gehörende erste Kopplung (41) und eine zu der Nebenachse gehörende zweite Kopplung (41) umfassen, wobei jede der ersten und zweiten Kopplungen geeignet sind, die laterale Bewegung von entweder der Haupt- oder der Nebenachsen (17, 25) in Bezug auf eine Fahrzeugstruktur zu hemmen, während deren vertikale Bewegung erlaubt wird; wobei der mindestens eine Stabilisator, gebildet von einer der ersten und zweiten Kopplungen, die Form eines Vierecks (41) hat.

15. Achsaggregat nach Anspruch 12, ferner umfassend einen integrierten zentralen Träger (101), der eine Verankerung für die ersten und zweiten Paare Radiusstangen (35, 35A, 82, 83) und die ersten und zweiten Kopplungen bereitstellt.

## Revendications

1. Ensemble essieu destiné à fournir un support mobile à une structure de véhicule par rapport à une surface de route, l'ensemble essieu comprenant :
- un essieu co-dirigé (25) qui comprend des roues (9) et des agencements de direction (1301 - 1303) destinés à diriger les roues ;
- un circuit de pression hydraulique (1000, 2000) qui comprend une pompe de fluide hydraulique (1008) ; des premier et deuxième modules de commande de pression (1009, 1010) ; des première et deuxième bornes d'alimentation en pression (1004, 1005) agencées au niveau d'emplacements respectifs dans le circuit ; et un réservoir de fluide hydraulique (1011) ;
- un actionneur de direction commandé par un fluide sous pression (1001, 2002) couplé de manière mécanique aux agencements de direction ; et comprenant des premier et deuxième compartiments d'actionneur (1002, 1003) raccordés de manière hydraulique par l'intermédiaire des première et deuxième bornes d'alimentation en pression (1004, 1005) ; lesdites roues comprenant un mécanisme d'auto-centrage actif en l'absence d'alimentation en pression dans le circuit de pression hydraulique ; et
- un dispositif de commande de direction agencé de manière à commander lesdits modules de commande de pression en fonction des signaux de direction reçus à partir d'une unité de direction principale ;
**caractérisé en ce que** :
- lesdites première et deuxième bornes d'alimentation en pression (1004, 1005) sont raccordées par l'intermédiaire d'au moins un premier module de commande de pression (1009) ; le premier module de commande de pression étant couplé en série avec le deuxième module de commande de pression (1010) ; et dans lequel
- un mécanisme à sûreté intégrée (1006) est prévu de manière à libérer, dans un état de défaillance, les premier et deuxième modules de commande de pression (1009, 1010) fournissant ainsi un raccordement hydraulique sans pression entre les compartiments d'actionneurs.

2. Ensemble essieu selon la revendication 1, dans lequel le mécanisme à sûreté intégrée (1006) comprend en outre un système d'arrêt de pompe de fluide et/ou une valve de dérivation (1017) pour libérer la pression du circuit de pression hydraulique.

3. Ensemble essieu selon la revendication 1, dans lequel de petits orifices (1018) qui servent de moyens d'amortissement, sont intégrés dans les orifices ou dans les conduits hydrauliques de l'actionneur de direction (1001).

4. Ensemble essieu selon la revendication 1, dans lequel les modules de commande de pression (1009, 1010) comprennent chacun une valve de commande de pression proportionnelle commandée de manière sélective entre un état passant normalement ouvert, induisant une chute de pression limitée ; et un état obstrué, induisant une chute de pression plus importante ; et le mécanisme à sûreté intégré agencé de manière à réinitialiser la soupape à l'état normalement ouvert.

5. Ensemble essieu selon la revendication 1, dans lequel les modules de commande de pression (1009, 1010) sont conçus de manière à fournir une chute de pression proportionnelle entre les premier et deuxième modules de commande de pression, qui correspond à des zones de transmission de forces effectives respectives conçues de manière asymétrique (1002', 1003') dans les compartiments d'actionneurs, de manière à se traduire par une force de direction chargée de manière sensiblement symétrique dans l'une ou l'autre direction de braquage des roues (9).

6. Ensemble essieu selon la revendication 1, dans lequel la pompe de fluide hydraulique (1008) est une pompe de fluide hydraulique commandée électriquement.

7. Ensemble essieu selon la revendication 1, dans lequel le mécanisme d'auto-centrage est prévu avec le point de contact de la roue (9) en arrière de la suspension de la roue et/ou avec un ressort d'auto-centrage qui centre les roues mécaniquement.

8. Ensemble essieu selon la revendication 1, comprenant en outre un actionneur supplémentaire (2001) commuté de manière hydraulique à une borne d'alimentation en pression supplémentaire (2005) prévue dans le circuit de pression (2000) ; dans lequel la borne d'alimentation en pression supplémentaire est couplée en parallèle sur les premier et deuxième modules de commande de pression (1009, 1010) et dans lequel le dispositif de commande de direction (1006) commande les premier et deuxième modules de commande de pression pour fournir une pression au système d'actionneur supplémentaire (2001) tout en équilibrant l'actionneur de direction (2002).

9. Système d'ensemble essieu selon la revendication 8, dans lequel l'actionneur supplémentaire comprend un mécanisme de retour (2004) destiné à garantir une position normalement rentrée qui n'est pas couplée mécaniquement à l'essieu (25) dans un état non levé ; et dans lequel, dans un état levé, l'actionneur supplémentaire (2001) est mis hors service à partir du circuit de pression (2000).

10. Système d'ensemble essieu selon la revendication 8, dans lequel l'actionneur supplémentaire est prévu en tant que système d'amortissement hydraulique (3000) qui amortit mécaniquement l'essieu (25).

11. Système d'ensemble essieu selon la revendication 10, dans lequel le système d'amortissement hydraulique (3000) comprend un cylindre de pression présentant un compartiment côté tige (3004) et un compartiment côté piston (3003) en communication fluidique l'un avec l'autre et couplés en outre à un compartiment d'amortissement de gaz (3005), la zone de transmission de force effective du côté tige (3004') étant asymétrique par rapport à la zone de transmission de force du côté piston de sorte qu'il en résulte une augmentation de la pression lors de l'actionnement de levage.

12. Système d'ensemble essieu selon la revendication 8, dans lequel l'ensemble essieu comprend en outre :
- un essieu principal (17) raccordant une première paire de moyeux (95) et une première paire de roues (9), chacune d'elle étant portée pour une rotation sur l'un respectif de la première paire de moyeux ;
- l'essieu co-dirigé (25) en tant qu'essieu auxiliaire associé à l'essieu principal, raccordant une deuxième paire de moyeux à une deuxième paire de roues (9) chacune d'elle étant portée pour une rotation sur l'un respectif de la deuxième paire de moyeux ;
- des moyens de suspension adaptés de manière à être intercalés entre chacun de l'essieu principal (17) et de l'essieu auxiliaire (25) et une structure de véhicule (27, 29) ;
- des moyens de guidage destinés à guider le déplacement de chacun de l'essieu principal et de l'essieu auxiliaire par rapport à une structure de véhicule (27, 29) ;
- dans lequel l'actionneur supplémentaire (2001) est efficace de manière sélective afin de déplacer l'essieu auxiliaire (25) par rapport à l'essieu principal (17), de manière à le lever à partir de la surface d'une route.

13. Ensemble essieu selon la revendication 12, dans lequel l'essieu auxiliaire (25) est agencé afin de permettre à un arbre de transmission (19) d'une structure de véhicule, de pouvoir être raccordé de manière entraînée à l'essieu principal (17) suivant une ligne droite ininterrompue, par un seul arbre d'entraînement non articulé d'une pièce à partir d'une sortie de transmission située sur la structure de véhicule.

14. Ensemble essieu selon la revendication 12, dans lequel les moyens de guidage comprennent une première paire de tiges de rayons (35, 35A) destinées à guider le déplacement de l'essieu principal et une deuxième paire de tiges de rayons (82, 83) destinées à guider le déplacement de l'essieu auxiliaire de manière à permettre un déplacement vertical de chacun des essieux principal et auxiliaire (17, 25), mais à limiter leur déplacement longitudinal par rapport à une structure de véhicule (27, 29) ; dans lequel les moyens de guidage incluent en outre au moins un stabilisateur destiné à stabiliser le roulis d'une structure de véhicule par rapport à la surface d'une route, l'au moins un stabilisateur étant associé à l'un des essieux principal et auxiliaire (17, 25) ; et dans lequel les moyens de guidage incluent en outre une première tringlerie (33) associée à l'essieu principal et une deuxième tringlerie (41) associée à l'essieu auxiliaire, chacune des première et deuxième tringleries étant adaptée de manière à limiter le déplacement latéral de l'un respectif des essieux principal et auxiliaire (17, 25) par rapport à une structure de véhicule, tout en permettant leur déplacement vertical ; l'au moins un stabilisateur formé par l'une des première et deuxième tringleries se présentant sous la forme d'un quadrilatère (41).

15. Ensemble essieu selon la revendication 12, comprenant en outre un support central intégré (101) fournissant un ancrage des première et deuxième paires de tiges de rayons (35, 35A, 82, 83) et des première et deuxième tringleries.
